# FASCICULE DE BREVET EUROPEEN

(11) **EP 0 595 742 B1**
(45) Date de publication et mention de la délivrance du brevet: **18.09.1996**
(21) Numéro de dépôt: 93420436.3
(22) Date de dépôt: 29.10.1993
(51) Int. Cl.: F16L 37/252, F16L 25/00

(54) **Dispositif pour l'assemblage de tronçons de tubes annelés en matière synthétique**
Vorrichtung zum Verbinden von Wellrohrabschnitten aus Kunststoff
Device for connecting plastic corrugated pipe sections

(30) Priorité: 30.10.1992 FR 9213283
(43) Date de publication de la demande: 04.05.1994
(73) Titulaire: ETABLISSEMENTS COURANT SA, F-01570 Manziat (FR)
(72) Inventeur: Courant, Alain, F-01570 Manziat (FR)
(74) Mandataire: Perrier, Jean-Pierre

(56) Documents cités:
- DE-A- 3 605 329
- US-A- 3 929 359
- US-A- 4 082 327

## Description

Pour protéger des câbles ou autres moyens de transmission, il est connu de les disposer dans des canalisations formées par une succession de tronçons de tubes, de longueur standard, liés les uns aux autres, avec ou sans étanchéité.

L'invention concerne plus particulièrement les tubes en matière synthétique à double paroi, comportant un annelage extérieur formé par des nervures circulaires espacées délimitant entre elles des gorges circulaires.

La liaison bout à bout de deux tronçons de tube s'effectue par divers moyens, dont le plus courant consiste, d'une part, à ménager à l'une des extrémités de chaque tronçon un manchon en forme de tulipe, rapporté, surmoulé ou fabriqué avec le tronçon, manchon ayant un diamètre intérieur supérieur au diamètre extérieur du tronçon et apte à recevoir, par emboîtement axial, l'autre extrémité formant embout de chaque tronçon, et, d'autre part, à assurer la liaison du manchon et de l'embout par enclenchement d'ergots ou autres coopérant avec au moins une gorge de calage en translation.

Un tel dispositif d'assemblage de deux tronçons de tube présente l'inconvénient d'exiger un effort axial important pour, lors de l'engagement de l'embout d'un tronçon dans le manchon d'un autre tronçon, assurer l'enclenchement des moyens de calage en translation longitudinale et, par exemple, le passage des ergots ou nervures de verrouillage sur les anneaux de l'embout. L'exigence d'un tel effort est d'autant plus gênante que l'assemblage des deux tronçons est effectué dans des conditions défavorables et, par exemple, au fond d'une tranchée et alors même que l'opérateur est dans une situation instable.

US-A-3 929 359 et US-A-4 082 327 décrivent un dispositif d'assemblage dans lequel les ergots, en forme de crans et ménagés sur un embout de plus petit diamètre externe que le corps du tronçon, pénètrent dans l'autre extrémité d'un tronçon en passant dans une succession de passages longitudinaux ménagés sur plusieurs ondes internes mâles, et assurent le calage en translation en coopérant avec les flancs d'une onde femelle, munie de moyens limitant le pivotement des ergots. Avec ce dispositif, l'effort axial d'engagement est réduit, mais le calage en translation présente un jeu longitudinal qui est défavorable à certaines applications.

La présente invention a pour but de remédier à ces inconvénients en fournissant un assemblage de tronçons n'exigeant pas d'efforts élevés et ne faisant appel à aucune pièce intermédiaire et assurant le calage des éléments assemblés.

Dans l'assemblage selon l'invention, la gorge de calage en translation a une dimension longitudinale égale à celle de l'ergot et communique par ses flancs avec au moins une rainure d'introduction qui, possédant un fond continu, est réalisée avec la gorge de calage dans l'une des extrémités d'assemblage, tandis que chacune des deux extrémités d'assemblage comporte un moyen de butée en translation apte à coopérer avec celui de l'autre extrémité pour, en fin d'engagement des extrémités l'une dans l'autre, positionner longitudinalement chaque ergot dans sa gorge de calage en prévision de la rotation relative amenant chaque ergot en appui sur les bords de cette gorge.

Ainsi, lors de l'assemblage du manchon et de l'embout de deux tronçons, les deux éléments de l'assemblage sont soumis à des mouvements relatifs, respectivement, de translation, pendant lequel chaque ergot coulisse dans la gorge d'introduction correspondante, et de rotation, pendant lequel chaque ergot est déplacé angulairement par rapport à/et dans la gorge de calage le recevant, jusqu'à ce qu'il prenne appui contre le bord de cette gorge et assure le calage en translation. Cette division des fonctions d'engagement et de calage permet de supprimer tout effort résistant et d'obtenir, par des mouvements simples, et exigeant de faibles efforts, la liaison positive recherchée entre les différents éléments.

Cette disposition facilite l'assemblage en supprimant tous risques de mauvais positionnement.

Dans une forme d'exécution préférée, chacun des ergots est conformé en fragment de filet hélicoïdal et les moyens de butée des deux éléments sont constitués par des faces coniques de l'annelage aptes à venir en contact d'étanchéité l'une contre l'autre.

Ainsi, la rotation relative des deux éléments permet non seulement d'amener les ergots dans les gorges de calage en translation, mais aussi de communiquer à au moins l'un des éléments un mouvement de translation complémentaire amenant les faces de butée en contact d'étanchéité, et cela sans entraîner une augmentation importante de l'effort résistant, puisque les faces en contact sont constituées par celles de deux anneaux et sont, par construction, déformables élastiquement.

Cette disposition permet donc d'obtenir sans aucun élément d'étanchéité rapporté, un assemblage ayant une étanchéité suffisante pour faciliter la mise en place, par des moyens pneumatiques, des câbles ou autres moyens de transmission dans le fourreau ainsi obtenu.

Cette étanchéité permet également d'utiliser les tronçons de tubes pour former un conduit d'assainissement ou tout autre conduit pour le transport d'un liquide.

Dans une forme d'exécution de l'invention, la rainure d'introduction est longitudinale et s'étend, longitudinalement, depuis l'extrémité de l'élément d'assemblage la portant jusqu'à la gorge de calage en translation et, radialement, dans l'épaisseur des anneaux externes.

Avec cet agencement, la liaison s'effectue en deux phases nettement distinctes, respectivement de translation et de rotation.

Dans une autre forme d'exécution, la rainure d'introduction est constituée par la partie débouchant de l'extrémité libre de l'élément d'assemblage d'une gorge en hélice qui, constituant gorge de calage en translation, est ménagée entre deux nervures hélicoïdales externes remplaçant localement les anneaux externes.

Dans ces conditions, la translation et la rotation sont simultanées.

D'autres caractéristiques et avantages ressortiront de la description qui suit en référence au dessin schématique annexé, représentant, à titre d'exemples non limitatifs, plusieurs formes d'exécution du dispositif d'assemblage selon l'invention.
Figure 1 est une vue en coupe longitudinale partielle d'un tronçon de tube à double paroi montrant une forme d'exécution du dispositif d'assemblage de ses extrémités,
Figures 2 et 3 sont des vues de face en bout montrant, en élévation et à échelle réduite, respectivement le manchon et l'embout du tronçon de tube de figure 1,
Figure 4 est une vue partielle en coupe transversale montrant l'assemblage de deux tronçons de figure 1,
Figure 5 est une vue en coupe suivant V-V de figure 4 montrant, à échelle réduite, les deux éléments du dispositif en cours d'assemblage,
Figure 6 est une vue partielle en coupe longitudinale montrant une autre forme d'exécution de ce dispositif,
Figure 7 est une vue partielle en coupe montrant l'assemblage des éléments de figure 6,
Figure 8 montre une variante de réalisation du dispositif des figures 1 à 5,
Figure 9 est une vue partielle en coupe montrant une autre forme d'exécution du dispositif d'assemblage, dans le cas de son application à un tronçon de tube à simple paroi,
Figures 10 et 11 sont des vues partielles en coupe longitudinale montrant une variante du dispositif de figure 9, respectivement lorsque les éléments sont séparés et en cours d'assemblage,
Figures 12 et 13 sont des vues en coupe partielle montrant une dernière forme d'exécution du dispositif, lorsque les éléments d'assemblage sont respectivement séparés et en fin d'assemblage.

Dans ce dessin, la référence 2 désigne, de manière générale, un tronçon de tube en matière synthétique composé d'une couche interne 3 et d'une couche externe 4. La couche interne forme un conduit de section cylindrique à paroi lisse, tandis que la couche externe est annelée, c'est à dire est formée d'une succession d'ondes délimitant des nervures circulaires 5 espacées par des gorges 6.

En fin de fabrication, chaque tronçon est conformé à l'une de ses extrémités sous forme d'un manchon ou tulipe 7, ayant un diamètre intérieur D de valeur au moins égale, au jeu fonctionnel près, au diamètre extérieur d de l'autre extrémité du tronçon constituant l'embout 8 du dispositif d'assemblage.

Selon l'invention, à leur sortie de fabrication, le manchon 7 et l'embout 8 comportent des moyens permettant leur assemblage réciproque, moyens dont les formes d'exécution vont être décrites en référence aux figures annexées.

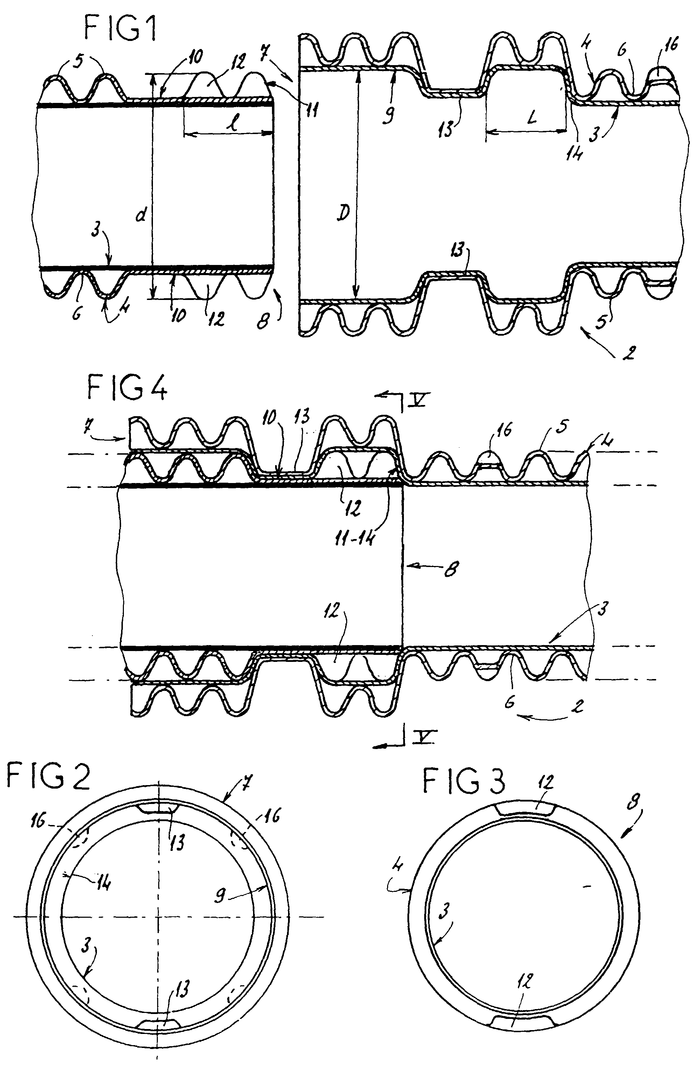

Dans la forme d'exécution représentée aux figures 1 à 5, l'embout 8 de chaque tronçon de tube comporte une gorge circulaire externe 10 dans laquelle débouchent deux rainures longitudinales 12, débouchant par ailleurs de l'extrémité de l'embout. La gorge 10 et les rainures 12 sont ménagées dans l'épaisseur des ondes formant les nervures circulaires 5 et gorges 6 de l'annelage.

Le manchon 7, ménagé à l'autre extrémité du tronçon de tube, comporte, localement et en saillie de son alésage interne 9, deux ergots 13 qui, comme le montre la figure 2, sont diamétralement opposés. Le profil de chaque ergot est identique à celui de la gorge 10 et sa dimension longitudinale est égale à celle de cette gorge, tandis que sa dimension transversale est égale, au jeu fonctionnel près, à celle de chaque rainure 12. Par ailleurs, la distance entre l'extrémité libre de l'embout 8 et le bord externe de la gorge circulaire 10 est sensiblement égale à la distance L entre le bord intérieur de l'ergot et l'épaulement 14 raccordant le manchon 7 du dispositif d'assemblage au corps du tronçon de tube 2, de manière que la butée de la face conique 11 de l'embout sur la face conique de l'épaulement 14 du manchon, assure la mise en coïncidence des ergots 13 avec la gorge 10.

Avec ce dispositif, pour assembler deux tronçons de tube, il suffit d'engager l'embout 8 d'un tronçon dans le manchon 7 d'un autre tronçon de tube en prenant soin d'aligner les rainures longitudinales 12 avec les ergots 13. Cette manoeuvre est d'autant plus aisée que chaque ergot forme une cuvette extérieure qui est parfaitement visible.

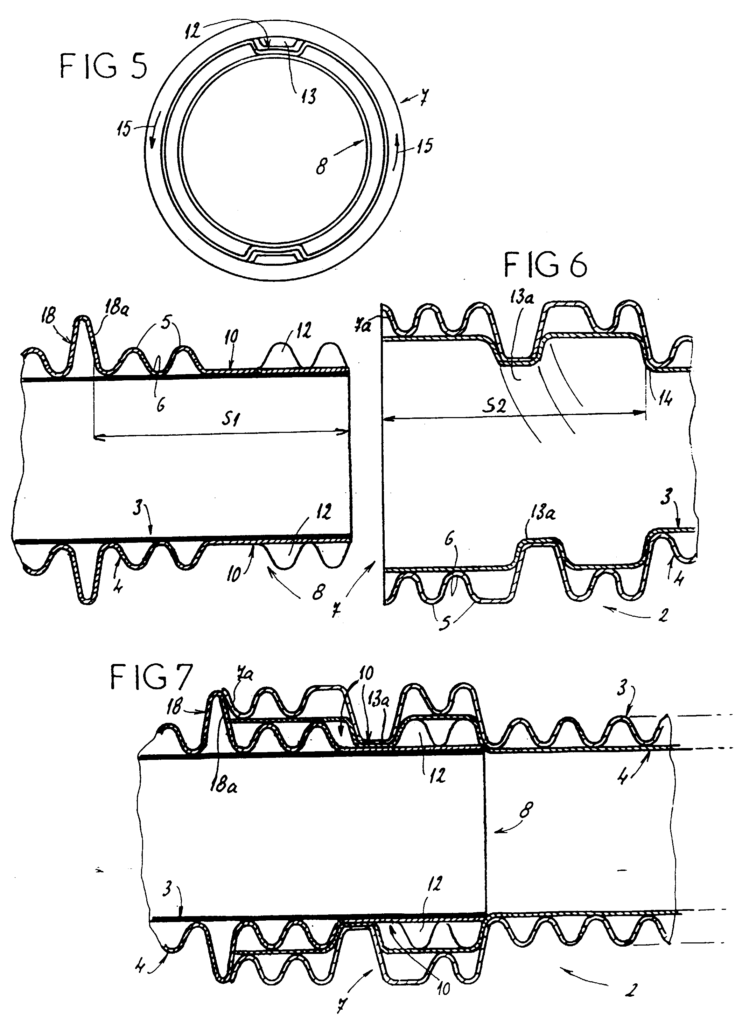

Durant cet engagement par translation, les deux rainures longitudinales 12 coulissent chacune par rapport à leur ergot jusqu'à ce que la face conique extrême 11 de l'embout 8 vienne en butée contre l'épaulement 14 du manchon 7, c'est à dire jusqu'à ce que les ergots 13 soient disposés dans la gorge circulaire 10. A ce stade, et comme représenté à la figure 5, une rotation dans le sens des flèches 15, ou en sens inverse, provoque la rotation des ergots dans la gorge circulaire 10 et leur décalage par rapport aux rainures d'introduction 12, c'est à dire amène les ergots en position de calage en translation par appui sur les bords de la gorge circulaire 10. Cet assemblage ne nécessite aucun effort pour vaincre des résistances d'encliquetage et conduit à un calage en translation positif, indémontable sans intervention humaine.

Il est évident que l'assemblage peut s'effectuer par déplacement du manchon 7 par rapport à l'embout 8.

Pour faciliter la rotation de l'un des deux éléments d'assemblage formés par le manchon 7 et l'embout 8, chacun, ou au moins l'un de ces éléments, comporte, comme montré à la figure 1 en ce qui concerne le manchon 7, à côté de la zone d'assemblage et dans une ou plusieurs nervures circulaires 5, des déformations locales 16 formant des zones d'ancrage pour un outil de serrage.

Dans la forme d'exécution représentée aux figures 6 à 7, chacun des ergots 13a ménagés dans le manchon 7 est en forme de fragment de filet hélicoïdal, de manière à communiquer au tronçon de tube qui le porte, un déplacement axial au début de sa rotation dans la gorge 10 de l'embout 8. De ce fait, sa section longitudinale est plus petite que celle de la gorge 10, de manière que l'ensemble du fragment de filet puisse se loger dans cette gorge. De même, les rainures 12 ont une largueur au moins égale à celle du fragment de filet.

Le déplacement axial est mis à profit pour appliquer l'extrémité libre du manchon 7, et plus précisément sa face conique 7a, contre le flanc 18a d'une nervure circulaire 18 ménagée sur l'embout 8 et ayant un plus grand diamètre que les autres nervures 5.

Bien entendu, la distance S1 entre l'extrémité de l'embout 8 et la face de la nervure 18, venant en contact d'étanchéité avec le manchon 7, est inférieure à la distance S2 entre l'extrémité libre du manchon 7 et le début de son épaulement 14, afin que, lors de l'assemblage et comme montré à la figure 7, le contact assurant l'étanchéité de l'assemblage s'effectue exclusivement par contact de l'extrémité 7a du manchon sur la nervure 18.

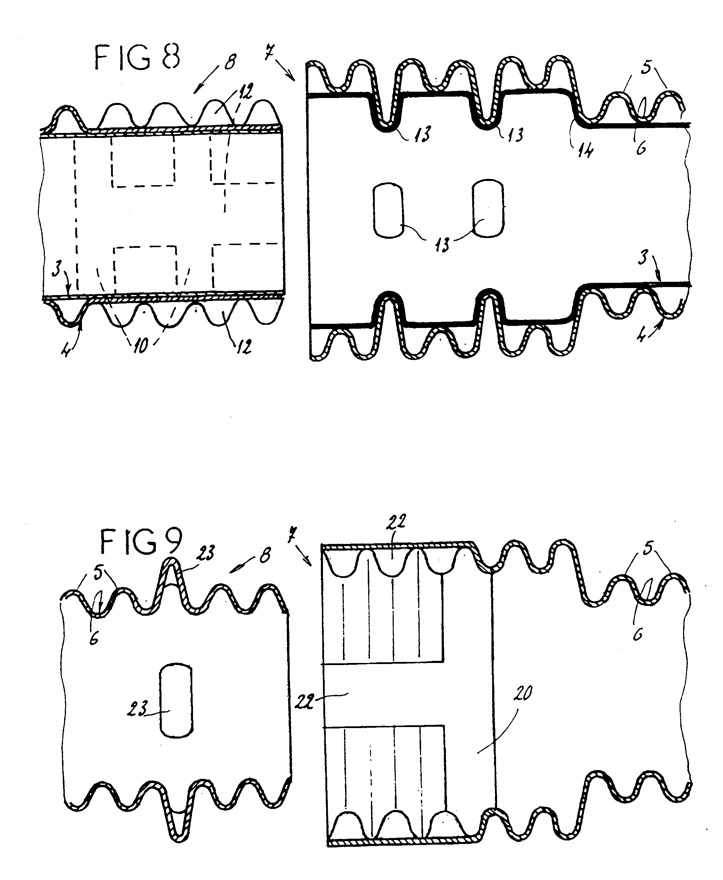

Il est évident que la forme, le volume, et le nombre des ergots 13, ainsi que la largeur des rainures longitudinales 12 et des gorges circulaires 10, sont adaptés aux besoins de la liaison. C'est ainsi qu'un même dispositif d'assemblage peut comporter plus de deux ensembles ergots-rainures 12-13 disposés diamétralement, et par exemple quatre, comme montré à la figure 8 et que, chaque rainure longitudinale 12 peut coopérer avec plus d'un ergot et, par exemple avec deux, comme montré à la figure 8, pour assurer une liaison plus résistante. Dans ces conditions, la rainure longitudinale 12 coopère avec autant de gorges circulaires 10 que le manchon 7 comporte d'ergots en alignement longitudinal.

Les figures 9 à 11 montrent que le dispositif d'assemblage peut aussi s'appliquer à des tronçons de tube ne comportant qu'une couche annelée 4. Dans la forme d'exécution de figure 9, les ergots 23 sont ménagés sur l'embout 8 et sont donc formés par des excroissances saillant localement et radialement de l'une des nervures circulaires 5 du tronçon de tube, tandis que les rainures longitudinales 22 sont ménagées dans le manchon 7 et débouchent à l'intérieur de celui-ci. Bien entendu, ces rainures 22 communiquent avec une gorge circulaire 20 permettant d'assurer le calage en translation des ergots 23 de l'embout 8. On comprendra aisément que cette structure inverse permet d'obtenir les mêmes résultats et avantages que les formes d'exécution précédentes.

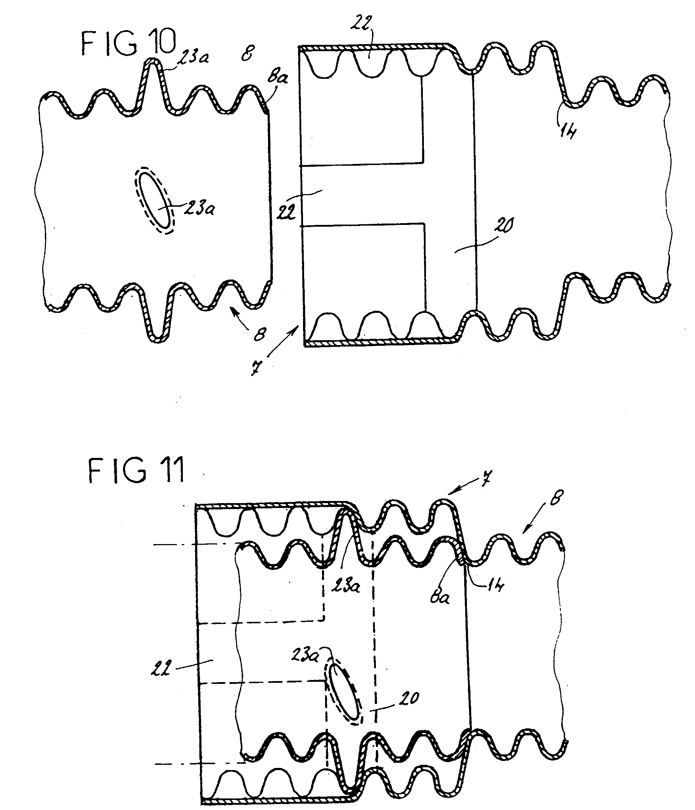

Dans la forme d'exécution représentée aux figures 10 à 11, chacun des ergots 23a, saillant à l'extérieur de l'embout 8, est conformé en fragments de filet hélicoïdal, de manière à pouvoir, après coulissement dans la rainure longitudinale 22 et au début de l'engagement dans la gorge 20, prendre appui sur le bord de cette gorge pour plaquer la face conique de butée 8a du manchon 8 contre la face conique de l'épaulement 14 du manchon 7, comme montré à la figure 11, et assurer ainsi l'étanchéité de la liaison obtenue.

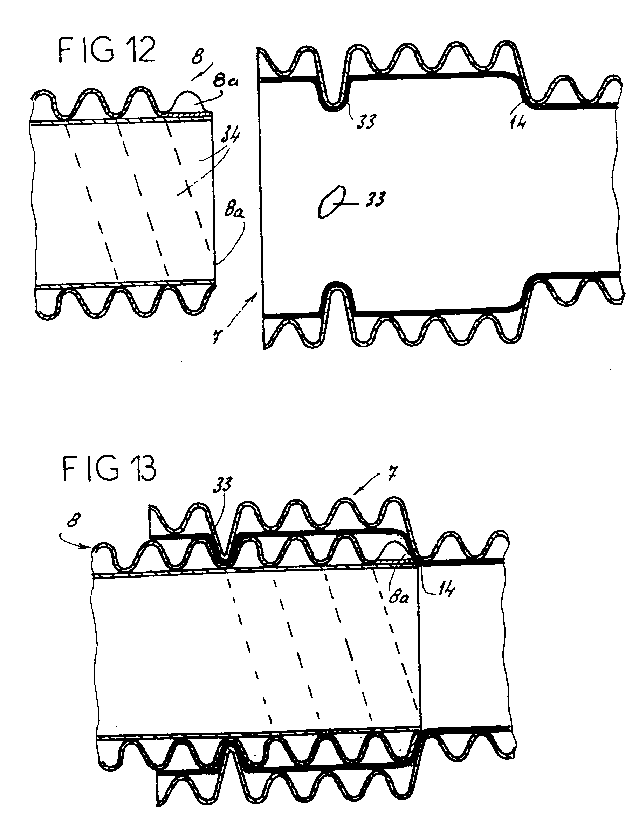

Dans la forme d'exécution représentée aux figures 12 à 13, les ergots 33 sont en saillie à l'intérieur du manchon 7 et sont chacun composés par un fragment de filet hélicoïdal, tandis que la partie formant l'embout 8 de chaque tronçon est munie de gorges hélicoïdales 34 débouchant de l'extrémité de l'embout par une partie 34a constituant rainure d'introduction. Les gorges hélicoïdales 34 sont en même nombre que les ergots 33 et sont, par exemple, du type quart de tour.

Avec ce dispositif d'assemblage, dès que les ergots sont positionnés angulairement en vis à vis du débouché des rainures d'introduction 34a, c'est à dire du débouché des gorges hélicoïdales 34, l'engagement des ergots dans les gorges et la création d'un mouvement rotatif relatif entre l'embout 8 et le manchon 7 provoquent le rapprochement des deux éléments du dispositif d'assemblage, rapprochement qui doit être effectué jusqu'à ce que la face de butée et d'étanchéité 8a de l'embout 8 vienne en contact d'étanchéité avec la face conique d'étanchéité de l'épaulement 14 du manchon 7, comme montré à la figure 13.

Il ressort de ce qui précède que, quelle que soit sa forme d'exécution, le dispositif d'assemblage selon l'invention permet d'assurer l'assemblage de deux tronçons de tube par des moyens simples, n'exigeant pas d'efforts excessifs, ne faisant appel à aucune pièce extérieure, ni à aucune opération extérieure de collage, soudage ou autre et permettant, dans certaines applications, d'obtenir une liaison étanche et démontable en cas de besoin.

Le dispositif d'assemblage selon l'invention, s'applique aux tubes en matière synthétique possédant une ou deux parois, et cela quelle que soit leur destination : fourreau de protection, étanche ou non, conduit d'assainissement, descente d'eaux usées.

## Revendications

1. Assemblage de tronçons de tubes annelés en matière synthétique comprenant, chacun une extrémité d'assemblage en forme d'embout et une extrémité d'assemblage en forme de manchon apte à recevoir l'embout d'un autre tronçon et dans lequel les moyens d'assemblage comprennent des ergots saillant sensiblement radiallement de l'une des extrémités d'assemblage et des passages ménagés dans les ondes de l'autre extrémité d'assemblage pour diriger chaque ergot dans une gorge de calage en translation, ces passages ayant une dimension transversale au moins égale à celle de l'ergot, **caractérisé en ce que** la gorge (10, 20) de calage en translation a une dimension longitudinale égale à celle de l'ergot (13, 13a, 23, 33) et communique par ses flancs avec au moins une rainure (12, 22) d'introduction qui, possédant un fond continu, est réalisée avec la gorge de calage dans l'une des extrémités d'assemblage (7, 8), tandis que chacune des deux extrémités d'assemblage (7, 8) comporte un moyen (7a, 8a, 11, 14) de butée en translation apte à coopérer avec celui de l'autre extrémité pour, en fin d'engagement des extrémités l'une dans l'autre, positionner longitudinalement chaque ergot (13, 13a, 23a, 23) dans sa gorge de calage (10, 20) en prévision de la rotation relative amenant chaque ergot en appui sur les bords de cette gorge.

2. Assemblage de tronçons selon la revendication 1, **caractérisé en ce que** chacun des ergots (13a-23a-33) est conformé en fragment de filet hélicoïdal et les moyens de butée des deux éléments sont constitués par des faces coniques (7a-18a-8a-14) de l'annelage de chacun des tronçons aptes à venir en contact d'étanchéité l'une contre l'autre.

3. Assemblage de tronçons selon l'une quelconque des revendications 1 et 2, **caractérisé en ce que** la rainure d'introduction (12-22) s'étend longitudinalement depuis l'extrémité de l'élément d'assemblage (7-8) la portant jusqu'à la gorge (10-20) de calage en translation et, radialement, dans l'épaisseur des anneaux externes.

4. Assemblage de tronçons selon l'une quelconque des revendications 1 à 3, **caractérisé en ce que** la rainure d'introduction (34a) est constituée par la partie débouchant de l'extrémité libre de l'élément d'assemblage (7-8) d'une gorge en hélice (34) qui, constituant gorge de calage en translation, est ménagée entre deux nervures hélicoïdales externes remplaçant localement les anneaux externes.

5. Assemblage de tronçons selon l'une quelconque des revendications 1 et 2, **caractérisé en ce que** l'embout (8) comporte au moins une rainure longitudinale d'introduction (12) qui, débouchant radialement vers l'extérieur et longitudinalement dans une gorge (10) entre anneaux, est apte à recevoir au moins l'un des ergots (13) saillant à l'intérieur de l'élément (2) en forme de manchon (7) d'un autre tronçon de tube.

6. Assemblage de tronçons selon la revendication 5, **caractérisé en ce que** chacun des ergots (13a) est constitué par un fragment de filet hélicoïdal apte, en fin d'engagement de l'embout (8) dans le manchon (7), à prendre appui sur la gorge (10) de calage en translation pour amener la face d'extrémité conique (7a) du manchon (7) en contact d'étanchéité contre la face conique (18a) d'une nervure annulaire (18) de plus grand diamètre externe que les anneaux (5) de l'embout (8).

7. Assemblage de tronçons selon l'une quelconque des revendications 1 et 2, **caractérisé en ce que** le manchon (7) comporte au moins une rainure longitudinale d'introduction (22), qui, débouchant radialement vers l'intérieur de ce manchon et longitudinalement dans la cavité interne d'un anneau formant gorge de calage en translation (20), est apte à recevoir au moins l'un des ergots (23) saillant radialement vers l'extérieur entre deux anneaux de l'élément en forme d'embout (8) d'un autre tronçon de tube.

8. Assemblage de tronçons selon la revendication 7, **caractérisé en ce que** chacun des ergots (23a) du manchon (7) est constitué par un fragment de filet hélicoïdal apte, en fin d'engagement de l'embout (8) dans le manchon (7), à prendre appui sur la paroi interne de la gorge (20) de calage en translation pour amener la face d'extrémité conique (8a) de l'embout (8) en contact d'étanchéité contre l'épaulement interne (14) du manchon (7).

9. Assemblage de tronçons selon la revendication 4, **caractérisé en ce que** l'embout (8) comporte plusieurs gorges hélicoïdales (34), débouchant de son extrémité libre et aptes chacune à coopérer avec l'un des ergots (33) qui, en forme de fragment de filet hélicoïdal, fait saillie à l'intérieur du manchon (7) d'un autre tronçon de tube.

10. Tronçon de tube annelé en matière synthétique, comprenant, à l'une de ses extrémités, un manchon (7) et à l'autre extrémité, un embout (8) et des moyens d'assemblage selon la revendication 1.

## Patentansprüche

1. Verbindung von Wellrohrabschnitten aus Kunststoff, bei der jeweils eines der Verbindungselemente wie ein Ansatzstück und eines der Verbindungselemente wie eine Buchse geformt ist, die zur Aufnahme eines Ansatzstückes eines anderen Rohrabschnitts geeignet ist, und weiterhin mit Verbindungsmitteln, die an einem der Verbindungselemente radial hervorstehende Vorsprünge und in dem gewellten Bereich des anderen Verbindungselements ausgesparte Aufnahmen umfassen, die zur Führung der Vorsprünge in eine Verschiebespermut geeignet sind, wobei die Aufnahmen in Querrichtung mindestens die gleiche Ausdehnung aufweisen wie die Vorsprünge,
**dadurch gekennzeichnet, daß**
die Verschiebesperrnut (10, 20) in Längsrichtung die gleiche Ausdehnung aufweist wie die Vorsprünge (13, 13a, 23, 33) und über ihre Seiten mit mindestens einer Einfühmut (12, 22) mit durchlaufendem Boden in Verbindung steht, die zusammen mit der Spermut auf einem der Verbindungselemente (7, 8) angeordnet ist, wohingegen jedes der beiden Verbindungselemente (7, 8) ein Anlagemittel (7a, 8a, 11, 14) aufweist, das geeignet ist, bei der Verschiebung mit dem des anderen Elements zusammenzuwirken, um bei vollständigem Ineinandergreifen der beiden Elemente jeden Vorsprung (13, 13a, 23a, 33) in seiner Spermut (10, 20) in Längsrichtung festzulegen, wobei jeder der Vorsprünge an den Rändern der entsprechenden Nut abgestützt ist, um einer Relativdrehung vorzubeugen.

2. Verbindung von Rohrabschnitten nach Anspruch 1, **dadurch gekennzeichne**t, daß jeder der Vorsprünge (13a, 23a, 33) als Teil eines Schraubgewindes ausgebildet ist und daß die Anlagemittel der beiden Elemente als konische Vorderseiten (7a, 18a, 8a, 14) in der Wellung eines jeden der Rohrabschnitte ausgebildet und geeignet sind, in dichtenden Kontakt miteinander zu gelangen.

3. Verbindung von Rohrabschnitten nach einem der Ansprüche 1 oder 2, **dadurch gekennzeichnet**, daß die Einführnut (12, 22) sich in Längsrichtung von dem Ende des Verbindungselements (7, 8), an dem sie angeordnet ist, bis zu der Verschiebespermut (10, 20) und radial in die Stärke der äußeren Wellung erstreckt.

4. Verbindung von Rohrabschnitten nach einem der Ansprüche 1 bis 3, **dadurch gekennzeichnet**, daß die Einführnut (34a) als ein in das freie Ende des Verbindungselements (7, 8) mündender Teil einer schraubenförmigen Nut (34) ausgestaltet ist, die die Verschiebespermut bildet und zwischen zwei schraubenförmigen Rippen ausgespart ist, die lokal die äußere Wellung ersetzen.

5. Verbindung von Rohrabschnitten nach einem der Ansprüche 1 oder 2, **dadurch gekennzeichnet**, daß das Ansatzstück (8) mindestens eine längsgerichtete Einführnut (12) aufweist, die radial in den Außenraum und in Längsrichtung in eine zwischen Wellen befindliche Nut (10) mündet, die für die Aufnahme von mindestens einem der Vorsprünge (13) geeignet ist, die im Innern des Elements (2) hervorragen, das als Buchse (7) an dem anderen Rohrabschnitt ausgeformt ist.

6. Verbindung von Rohrabschnitten nach Anspruch 5, **dadurch gekennzeichnet, daß** jeder der Vorsprünge (13a) als Teil eines Schraubgewindes ausgestaltet ist und geeignet ist sich bei vollständigem Eingreifen des Ansatzstückes (8) in die Buchse (7) in der Verschiebesperrnut (10) abzustützen, um so die konische Vorderseite (7a) des Endes der Buchse (7) im dichtenden Kontakt gegen die konische Vorderseite (18a) einer kreisförmigen Rippe (18) zu pressen, die einen sehr viel größeren Außendurchmesser aufweist als die Wellen (5) des Ansatzstückes (8).

7. Verbindung von Rohrabschnitten nach einem der Ansprüche 1 oder 2, **dadurch gekennzeichnet**, daß die Buchse (7) mindestens eine längsgerichtete Einführnut (22) aufweist, die radial in das Innere dieser Buchse und in Längsrichtung in den Innenraum einer Welle mündet, die die Verschiebesperrnut (10) bildet und geeignet ist, mindestens einen der Vorsprünge (23) aufzunehmen, die radial nach außen zwischen zwei Wellen des Elements hervorragen, das als Ansatzstück (8) an dem anderen Rohrabschnitt ausgeformt ist.

8. Verbindung von Rohrabschnitten nach Anspruch 7, **dadurch gekennzeichnet**, daß jeder der Vorsprünge (23a) der Buchse (7) als Teil eines Schraubgewindes ausgestaltet und geeignet ist, sich bei vollständigem Eingreifen des Ansatzstückes (8) in die Buchse (7) an der inneren Wand der Verschiebespermut (20) abzustützen, um so die konische Vorderseite (8a) des Ansatzstückes (8) im dichtenden Kontakt gegen das innere Widerlager (14) der Buchse (7) zu pressen.

9. Verbindung von Rohrabschnitten nach Anspruch 4, **dadurch gekennzeichnet, daß** das Ansatzstück (8) mehrere schraubenförmige Nuten (34) umfaßt, die in sein freies Ende münden und jeweils geeignet sind, mit einem der Vorsprünge (33) zusammenzuwirken, die in Form von Teilen eines Schraubgewindes im Innern der Buchse (7) des anderen Rohrabschnitts hervorragen.

10. Wellrohrabschnitt aus Kunststoff, der an einem seiner Enden eine Buchse (7) und an dem anderen seiner Enden ein Ansatzstück (8) sowie weiterhin Verbindungsmittel gemäß Anspruch 1 umfaßt.

## Claims

1. Assembly of sections of corrugated tubes made from synthetic material, each comprising an assembly end in the form of an end-fitting, and an assembly end in the form of a sleeve capable of receiving the end-fitting of another section, and in which the assembly means comprise lugs projecting substantially radially from one of the assembly ends and passages formed in the waves of the other assembly end for directing each lug into a groove for wedging in terms of translation, these passages having a transverse dimension at least equal to that of the lug, characterized in that the groove (10, 20) for wedging in terms of translation has a longitudinal dimension equal to that of the lug (13, 13a, 23, 33) and communicates via its flanks with at least one insertion slot (12, 22) which, having a continuous bottom, is produced with the wedging groove in one of the assembly ends (7, 8), while each of the two assembly ends (7, 8) includes a means (7a, 8a, 11, 14) of abutment in terms of translation capable of interacting with that of the other end so as to position each lug (13, 13a, 23a, 23) longitudinally in its wedging groove (10, 20) with provision of the relative rotation bringing each lug to bear on the edges of this groove when the ends have been engaged in one another.

2. Assembly of sections according to Claim 1, characterized in that each of the lugs (13a-23a-33) is shaped as a fragment of a helical screw thread and the abutment means of the said elements consist of tapered faces (7a-18a-8a-14) of the corrugation of each of the sections which are capable of coming into sealing contact against one another.

3. Assembly of sections according to either one of Claims 1 and 2, characterized in that the insertion slot (12-22) extends longitudinally from the end of the assembly element (7-8) which carries it as far as the groove (10-20) for wedging in terms of translation and, radially, into the thickness of the external corrugations.

4. Assembly of sections according to any one of Claims 1 to 3, characterized in that the insertion slot (34a) consists of the emerging part of the free end of the assembly element (7-8) of a helical groove (34) which, constituting a groove for wedging in terms of translation, is formed between two external helical ribs locally replacing the external corrugations.

5. Assembly of sections according to either one of Claims 1 and 2, characterized in that the end-fitting (8) includes at least one longitudinal insertion slot (12) which, emerging radially outwards and longitudinally into an inter-corrugation groove (10), is capable of receiving at least one of the lugs (13) which project into the element (2), in the form of a sleeve (7), of another section of tube.

6. Assembly of sections according to Claim 5, characterized in that each of the lugs (13a) consists of a fragment of helical screw thread capable, at the end of engagement of the end-fitting (8) in the sleeve (7), of bearing on the groove (10) for wedging in terms of translation so as to bring the tapered end face (7a) of the sleeve (7) into sealing contact against the tapered face (18a) of an annular rib (18) whose external diameter is greater than the corrugations (5) of the end-fitting (8).

7. Assembly of sections according to either one of Claims 1 and 2, characterized in that the sleeve (7) includes at least one longitudinal insertion slot (22) which, emerging radially towards the inside of the sleeve, and longitudinally into the internal cavity of a corrugation forming a groove (20) for wedging in terms of translation, is capable of receiving at least one of the lugs (23) which project radially towards the outside between two corrugations of the element in the form of an end-fitting (8) of another section of tube.

8. Assembly of sections according to Claim 7, characterized in that each of the lugs (23a) of the sleeve (7) consists of a fragment of helical screw thread capable, at the end of engagement of the end-fitting (8) in the sleeve (7), of bearing on the internal wall of the groove (20) for wedging in terms of translation so as to bring the tapered end face (8a) of the end-fitting (8) into sealing contact against the internal shoulder (14) of the sleeve (7).

9. Assembly of sections according to Claim 4, characterized in that the end-fitting (8) includes several helical grooves (34), emerging from its free end and each one capable of interacting with one of the lugs (33) which, in the form of a fragment of a helical screw thread, project into the sleeve (7) of another section of tube.

10. Section of corrugated tube made from synthetic material comprising, at one of its ends, a sleeve (7) and, at the other end, an end-fitting (8) and assembly means according to Claim 1.
